# DEMANDE DE BREVET EUROPEEN

(11) **EP 0 686 664 A1**
(43) Date de publication de la demande: **13.12.1995**
(21) Numéro de dépôt: 95201399.3
(22) Date de dépôt: 30.05.1995
(51) Int. Cl.: C08K 5/10, C08K 5/14, C08L 23/10

(54) **Composition à base de polymère du propylène, procédé pour son obtention et utilisation**

(30) Priorité: 06.06.1994 BE 9400558
(71) Demandeur: SOLVAY (Société Anonyme), B-1050 Bruxelles (BE)
(72) Inventeur: Lambla, Morand, F-67800 Hoenheim (FR); Graebling, Didier, F-67201 Eckbolsheim (FR)
(74) Mandataire: Marckx, Frieda

(57) **Abrégé**

Composition à base de polymère du propylène obtenue par mélange en fondu de:
- 35 à 98,98 % en poids d'un polymère (a) choisi parmi les homopolymères du propylène et les copolymères du propylène contenant au moins 50 % en mole de propylène,
- 1 à 50 % en poids d'un polymère (b) choisi parmi les homopolymères d'éthylène et les copolymères d'éthylène contenant au moins 90 % en mole d'éthylène,

avec
- de 0,01 à 10 % en poids d'un composé fonctionnel (c) choisi parmi les composés comprenant au moins 3 groupements acrylate;
- de 0,01 à 5 % en poids d'un composé (d) susceptible de générer des radicaux libres.

## Description

La présente invention concerne une composition à base de polymère du propylène de propriétés rhéologiques modifiées. Elle concerne également un procédé d'obtention de cette composition ainsi que son utilisation pour le façonnage d'objets par les procédés d'extrusion, de calandrage, d'injection et de thermoformage ainsi que pour la fabrication de mousses. Elle concerne enfin des objets façonnés contenant cette composition.

Les polymères cristallins du propylène sont connus pour leurs propriétés mécaniques ainsi que pour leur transparence et leur résistance à la chaleur. Leur coût relativement peu élevé en fait un matériau de choix pour un grand nombre d'applications telles que la formation d'objets façonnés.

Néanmoins leurs propriétés rhéologiques et en particulier leurs caractéristiques viscoélastiques sont telles qu'ils peuvent difficilement être mis en oeuvre par certaines méthodes telles que par exemple l'extrusion, le calandrage, l'injection et le thermoformage. Ces polymères sont en outre peu adaptés à la formation de mousses.

On a déjà tenté d'améliorer les propriétés du polypropylène en traitant thermiquement un mélange contenant du polypropylène avec un peroxyde organique et un agent de réticulation choisi par exemple parmi le divinylbenzène, les allylcyanurates ainsi que des acrylates particuliers (JP-A-59/093711). Selon ce document, le divinylbenzène est particulièrement bien adapté. On obtient ainsi un polypropylène présentant un excellent brillant superficiel, une bonne résistance à la chaleur, une vitesse de cristallisation élevée, une grande tension au point de fusion et une bonne rigidité.

Lorsque l'agent de réticulation est un acrylate, les propriétés rhéologiques de ces mélanges restent insuffisantes pour certaines applications telles que le thermoformage et la fabrication de mousses.

Par ailleurs la demande de brevet JP-A-59/223740 divulgue en toute généralité des compositions à base de polypropylène présentant à la fois une bonne résistance aux chocs et une vitesse de cristallisation élevée obtenues par mélange en fondu de polypropylène et de polyéthylène en présence d'un copolymère éthylène-propylène présentant une isotacticité mesurée par résonance magnétique nucléaire ¹³C inférieure à 0,7, d'un peroxyde organique et d'un agent de réticulation similaire à celui décrit dans le document JP-A-59/093711.

Selon ce document qui n'illustre que l'utilisation de divinylbenzène à titre d'agent de réticulation, la présence du polyéthylène et du copolymère éthylènepropylène est indispensable pour l'obtention des propriétés souhaitées. Il en résulte que ces compositions qui contiennent trois composants polymériques distincts et non miscibles peuvent difficilement être obtenues sous la forme de dispersions stables, fines et homogènes.

On a maintenant trouvé une nouvelle composition à base de polypropylène qui présente des propriétés rhéologiques à l'état fondu améliorées et en particulier une augmentation de la résistance à la déformation lors de l'allongement ou de l'extension et qui ne présente pas les inconvénients des compositions appartenant à l'art antérieur.

En conséquence, la présente invention concerne une composition à base de polymère du propylène obtenue par mélange en fondu de :
- 35 à 98,98 % en poids d'un polymère (a) choisi parmi les homopolymères du propylène et les copolymères du propylène contenant au moins 50 % en mole de propylène,
- 1 à 50 % en poids d'un polymère (b) choisi parmi les homopolymères d'éthylène et les copolymères d'éthylène contenant au moins 90 % en mole d'éthylène,

avec
- de 0,01 à 10 % en poids d'un composé fonctionnel (c) choisi parmi les composés comprenant au moins 3 groupements acrylate;
- de 0,01 à 5 % en poids d'un composé (d) susceptible de générer des radicaux libres.

Le polymère (a) est choisi parmi les homopolymères du propylène et les copolymères de ce dernier contenant au moins 50 % en mole de propylène et au moins un autre monomère choisi parmi les α-oléfines contenant de 2 à 20 atomes de carbone, les acides organiques insaturés et leurs dérivés, les esters vinyliques, les composés vinyliques aromatiques, les vinylsilanes ainsi que les dioléfines aliphatiques et monocycliques non conjuguées, les dioléfines alicycliques ayant un pont endocyclique et les dioléfines aliphatiques conjuguées. A titre d'exemples d'α-oléfines, on peut citer l'éthylène, le 1-butène, le 1-pentène, le 1-hexène, les méthyl-1-butènes, les méthyl-l-pentènes, le 1-octène et le 1-décène.

A titre d'exemples des autres monomères, on peut citer l'acide acrylique, l'acide méthacrylique, l'acide maléique, le méthylméthacrylate, l'acrylate et le méthacrylate de glycidyle, l'anhydride maléique, l'acétate et le butyrate de vinyle, le styrène et le méthylstyrène, le vinyltriméthylméthoxysilane et le γ-méthacryloyloxypropyltriméthoxysilane ainsi que l'hexadiène-1,4, le 4-vinylcyclohexène, le dicyclopentadiène, le méthylène- et l'éthylidènenorbornène, le butadiène et l'isoprène.

Les copolymères du propylène avec les α-oléfines sont particulièrement préférés et parmi ceux-ci les copolymères du propylène avec au moins un autre monomère choisi parmi l'éthylène et le 1-butène donnent de bons résultats.

Dans le cadre de la présente invention, on entend par copolymères du propylène aussi bien les copolymères statistiques du propylène que les copolymères à blocs de ce dernier.

Les premiers sont généralement constitués de chaînes macromoléculaires dans lesquelles sont répartis statistiquement les monomères. La teneur en propylène de ces copolymères statistiques est le plus souvent supérieure à 70 % en mole, de préférence supérieure ou égale à 75 % en mole. Les seconds sont constitués de blocs distincts de composition variable; chaque bloc consistant en un homopolymère du propylène ou d'une autre α-oléfine ou en un copolymère statistique comprenant du propylène et au moins un autre monomère choisi parmi les monomères cités ci-avant.

Les copolymères à blocs du propylène sont généralement obtenus par polymérisation en plusieurs étapes consécutives dans lesquelles on prépare successivement les différents blocs.

Les copolymères du propylène sont généralement préférés. Les copolymères à blocs du propylène donnent de bons résultats.

Les copolymères à blocs qui contiennent de 30 à 90 % en poids d'un premier bloc qui est un homopolymère du propylène et de 70 à 10 % en poids d'un second bloc qui est un copolymère statistique du propylène contenant de 40 à 60 % en mole d'éthylène donnent de particulièrement bons résultats.

Le polymère (b) est choisi parmi les homopolymères d'éthylène et les copolymères d'éthylène contenant au moins 90 % en mole d'éthylène et au moins un autre monomère choisi parmi les α-oléfines contenant de 3 à 20 atomes de carbone ainsi que les autres monomères décrits ci-avant en rapport avec le polymère (a). De préférence cet autre monomère est choisi parmi les α-oléfines et les dioléfines. Le 1-butène et le 1-hexène conviennent bien. La quantité d'éthylène dans le polyéthylène (b) est le plus souvent supérieure ou égale à 95 % en mole. Les polymères contenant au moins 97 % en mole d'éthylène conviennent particulièrement bien. Les polymères d'éthylène (b) préférés ont le plus souvent une densité supérieure à 0,92 et plus particulièrement de 0,94 à 0,98.

Les polymères (a) et (b) sont bien connus de l'homme du métier. Ils sont généralement obtenus par polymérisation des monomères en une ou plusieurs étapes en présence de catalyseurs de type Ziegler Natta ou de catalyseurs à base de chrome.

La quantité de polymère (b) mis en oeuvre est généralement supérieure ou égale à 5 % en poids, et de préférence supérieure ou égale à 10 % en poids. Lorsque le polymère (a) est un homopolymère du propylène, on constate que cette quantité est avantageusement d'au moins 20 % en poids. Dans ce cas particulier, la quantité de polymère (b) est le plus souvent inférieure à 40 % en poids. Lorsque le polymère (a) est un copolymère du propylène, la quantité de polymère (b) mis en oeuvre est en outre avantageusement inférieure ou égale à 30 % en poids, plus particulièrement inférieure ou égale à 20 % en poids. Dans ce cas, on obtient de bons résultats lorsque la quantité de polymère (b) est de 10 à 20 % en poids.

Les composés fonctionnels (c) utilisables dans les compositions selon la présente invention contiennent généralement au maximum 7 groupements acrylate. Les composés (c) qui contiennent de 3 à 5 groupements acrylate donnent de bons résultats. A titre d'exemples préférés de ces composés, on peut citer les composés suivants communément appelés le triméthylol - propane - triacrylate, le triméthylol - propane - éthoxy - triacrylate, le glycérol - propoxy - triacrylate, le pentaérythritol - triacrylate, le di - triméthylol - propane - tétracrylate, le pentaérythritol - tétracrylate, le pentaérythritol - éthoxy - tétracrylate, le triméthylol - propane - triméthacrylate et le pentaérythritol - éthoxy - triacrylate. Il va de soi que un ou plusieurs composés (c) peuvent être mis en oeuvre.

Toutes autres choses étant égales le triméthylol - propane - triacrylate, le triméthylol - propane - éthoxy - triacrylate, le pentaérythritol - triacrylate, le di - triméthylol - propane - tétracrylate, le pentaérythritol - éthoxy - tétracrylate donnent de particulièrement bons résultats.

La quantité de composé fonctionnel (c) est le plus souvent d'au moins 0,05 % en poids, de préférence d'au moins 0,5 % en poids. On obtient de bons résultats lorsque la quantité de composé fonctionnel est inférieure ou égale à 6 % en poids, plus particulièrement inférieure ou égale à 2 % en poids. Des quantités de 0,5 à 2 % en poids donnent de particulièrement bons résultats.

Le composé (d) susceptible de générer des radicaux libres est le plus souvent choisi parmi les peroxydes organiques, les persulfates et les composés diazo. A titre d'exemple de ces composés, on peut citer le N-bromosuccinimide, les peroxydes de benzoyle et de dicumyle, l'hydroperoxyde de cumène, le 2,5 - diméthyl - 2,5 - ditertiobutylperoxyhexane, les persulfates de potassium ou d'ammonium, l'azobisisobutyronitrile, etc. Les composés qui conviennent le mieux sont ceux qui se décomposent aux températures auxquelles est effectué le mélange en fondu. Les peroxydes sont généralement préférés. Parmi ceux-ci le 2,5 - diméthyl - 2,5 - ditertiobutylperoxyhexane, le tertbutylcumyl peroxyde et le dicumyle peroxyde donnent de bons résultats.

La quantité de composé (d) mis en oeuvre est le plus souvent supérieure ou égale à 0,01 % en poids. Elle est en outre généralement inférieure ou égale à 1 % en poids, plus particulièrement inférieure ou égale à 0,1 % en poids. Des quantités de 0,01 à 0,1 % en poids donnent de bons résultats.

Les compositions selon la présente invention sont obtenues par mélange en fondu des différents composants. Le plus souvent ce mélange en fondu est réalisé dans des conditions telles qu'il y ait réaction au moins partielle des molécules du composé fonctionnel (c) entre elles et/ou avec les polymères (a) et/ou (b).

Les conditions dans lesquelles est effectué ce mélange ne sont pas critiques pour autant qu'elles induisent la fusion au moins partielle des polymères (a) et (b). De préférence elles sont telles qu'il y a fusion complète des polymères (a) et (b).

Généralement le mélange est effectué à une température ne dépassant pas 400 °C, de préférence pas 300 °C et plus particulièrement pas 250 °C. La température minimale à laquelle le mélange en fondu est effectué est supérieure ou égale à 130 °C, de préférence supérieure ou égale à 150 °C et plus particulièrement supérieure à 180 °C. On obtient de très bons résultats lorsque cette température est supérieure à 180 °C et inférieure ou égale à 230 °C.

La durée du mélange est choisie en tenant compte de la nature des composés mis en oeuvre et de la température de mélange. Cette durée varie généralement de 5 secondes à 120 minutes, le plus souvent de 10 secondes à 30 minutes.

Le mélange des polymères (a) et (b) avec les composés (c) et (d) est effectué dans tous dispositifs connus à cet effet. Ainsi on peut utiliser des malaxeurs internes ou externes. Les malaxeurs internes sont les plus appropriés et parmi ceux-ci les malaxeurs discontinus de type BRABENDER et les malaxeurs continus tels que les extrudeuses.

Les extrudeuses sont généralement préférées. L'ordre d'introduction des différents composants dans le malaxeur n'est pas critique. On peut indifféremment les introduire isolément et successivement ou réaliser un prémélange des différents constituants les uns avec les autres ou d'une partie seulement de ces constituants.

Lorsque le polymère (a) est un homopolymère du propylène, il s'avère particulièrement avantageux d'effectuer un prémélange de préférence en fondu de ce polymère avec le polymère (b). Le prémélange est ensuite soumis à un mélange en fondu avec les composés (c) et (d) pour obtenir les compositions selon l'invention.

Les compositions selon la présente invention peuvent également contenir d'autres additifs conventionnels tels que par exemple des stabilisants, des lubrifiants, des agents antistatiques, des agents de nucléation, des agents moussants, des fibres de verre ou toutes autres charges.

On obtient de bons résultats lorsque les compositions selon l'invention sont obtenues en l'absence d'élastomère distinct des polymères (a) et (b). Les compositions préférées sont obtenues dans des conditions telles que les polymères (a) et (b) constituent au moins 99 % en poids de l'ensemble des polymères mis en oeuvre. Les compositions présentant les meilleures performances sont obtenues en ne mettant en oeuvre à titre de polymère que les polymères (a) et (b).

Les compositions selon la présente invention présentent des propriétés rhéologiques et viscoélastiques particulièrement intéressantes. On constate en effet qu'elles présentent à l'état fondu, une augmentation de la résistance à la déformation lors de l'allongement ou de l'extension. Un tel phénomène est généralement appelé "durcissement structural sous contrainte". Il peut aisément être caractérisé par la détermination, pour une température et une vitesse d'élongation données, de la variation de la viscosité élongationnelle de la composition à l'état fondu en fonction de la durée d'élongation. Soumises à de tels tests, les compositions selon la présente invention présentent une augmentation de la viscosité élongationnelle jusqu'à la rupture de la masse fondue. Un tel comportement rend les compositions selon la présente invention particulièrement intéressantes pour l'obtention d'objets façonnés par injection et par extrusion et en particulier par extrusion- ou injection-soufflage, thermoformage ou enduction (voir par exemple ANTEC 92/569). Une telle propriété est également essentielle pour la fabrication de mousses. De telles utilisations des compositions selon l'invention de même que les objets façonnés contenant lesdites compositions constituent dès lors des aspects supplémentaires de la présente invention.

On remarque en outre que la dispersion des polymères (a) et (b) dans les compositions selon l'invention est remarquablement fine, homogène et stable, c'est-à-dire qu'elle se conserve en fondu en l'absence de cisaillement ou de malaxage. Une telle propriété permet de mettre en oeuvre les compositions selon l'invention de nombreuses fois sans observer d'importantes diminutions de leurs performances ce qui en facilite le recyclage.

On remarque également que les compositions selon la présente invention contiennent peu et avantageusement pas d'agglomérats de viscosité plus élevée (appelé ci-après gels) susceptibles d'altérer les objets façonnés les contenant.

La présente invention concerne enfin un procédé d'obtention d'une composition à base de polymère du propylène comprenant une étape de mélange en fondu de:
- 35 à 98,98 % en poids d'un polymère (a) choisi parmi les homopolymères du propylène et les copolymères du propylène contenant au moins 50 % en mole de propylène,
- 1 à 50 % en poids d'un polymère (b) choisi parmi les homopolymères d'éthylène et les copolymères d'éthylène contenant au moins 90 % en mole d'éthylène,

avec
- de 0,01 à 10 % en poids d'un composé fonctionnel (c) choisi parmi les composés comprenant au moins 3 groupements acrylate;
- de 0,01 à 5 % en poids d'un composé (d) susceptible de générer des radicaux libres.

Les différentes caractéristiques de ce procédé sont identiques à celles décrites ci-avant en rapport avec les compositions selon la présente invention.

Le procédé selon la présente invention présente l'avantage d'être particulièrement simple à mettre en oeuvre. Il permet également d'obtenir de manière reproductible et dans des laps de temps relativement courts les compositions selon l'invention.

Les exemples suivants servent à illustrer l'invention.

Dans ces exemples, les compositions selon l'invention sont obtenues à l'aide d'une extrudeuse double-vis corotative de type WERNER & PFLEIDERER ZSK 3O dont les vis sont constituées successivement des zones d'alimentation, de mélange et de dévolatilisation. La température de la zone d'alimentation est 160 °C à l'entrée et 180 °C à la sortie; la température de la zone de mélange est 190 °C à l'entrée et 210 °C à la sortie, la température de la zone de dévolatilisation est de 210 °C.

La vitesse de rotation des vis est de 150 tours/min pour un débit matière de 5 kg/h. Les différents produits sont prémélangés au tonneau.

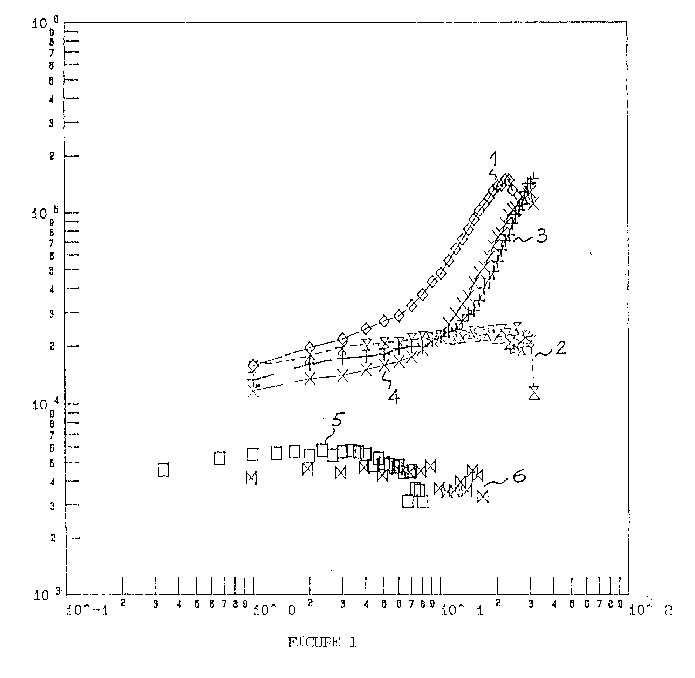

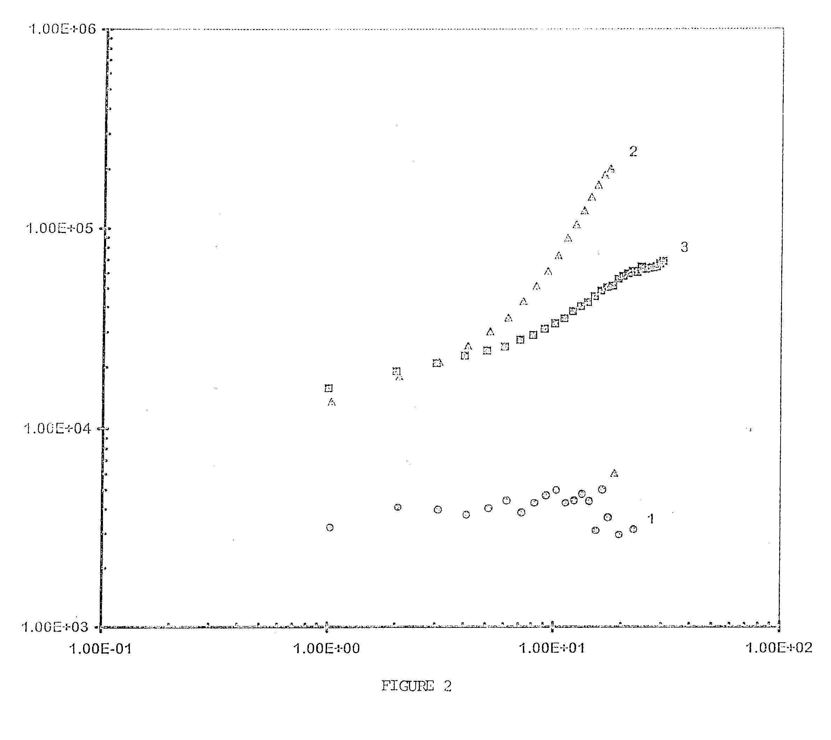

La viscosité élongationnelle des compositions obtenues dans les exemples est déterminée au moyen d'un rhéomètre commercialisé par RHEOMETRICS sous la dénomination RHEOMETRICS EXTENSIONAL RHEOMETER RER-9000. Les courbes reprises dans les figures 1 et 2 ci-annexées (appelées ci-après diagrammes RER) reprennent la variation, à 190 °C, de la viscosité élongationnelle à l'état fondu (exprimée en Pa.s) en fonction du temps (exprimé en s) pour un gradient d'élongation (exprimée en s⁻¹) de 0,1 pour les exemples 1 à 4, 8, 9, 2R, 6R et 7R et 0,3 pour l'exemple 5R. A la figure 1, la courbe 1 correspond à l'exemple 1, la courbe 2 à l'exemple 2R, la courbe 3 à l'exemple 3, la courbe 4 à l'exemple 4, la courbe 5 à l'exemple 5R et la courbe 6 à l'exemple 6R; à la figure 2, la courbe 1 correspond à l'exemple 7R, la courbe 2 à l'exemple 8 et la courbe 3 à l'exemple 9.

La détermination du taux de gels des compositions est effectuée avec un mélange d'isomères du xylène (point d'ébullition compris entre 137 et 140 °C) à l'aide d'un extracteur du type Soxhlet. L'extraction est poursuivie pendant 35 heures.

### Exemple 1

On alimente l'extrudeuse avec un mélange contenant :
- 2700 g d'un copolymère à blocs du propylène commercialisé sous la dénomination ELTEX® P RL 001 P par la société SOLVAY;
- 300 g d'un polyéthylène commercialisé sous la dénomination ELTEX A 1050 P par SOLVAY;
- 36 g de triméthylol - propane - triacrylate (TMPTA);
- 1 g de 2,5 - diméthyl - 2,5 -di - tertbutylperoxyhexane (DHBP).

La composition ainsi obtenue est exempte de gels.

Le diagramme RER représenté à la courbe 1, figure 1, montre le phénomène de durcissement structural sous contrainte.

### Exemple 2R

On alimente l'extrudeuse avec le mélange de polymères de l'exemple 1 mais sans addition de TMPTA ni de DHBP.

Le diagramme RER de cette composition représenté par la courbe 2 de la figure 1 montre l'absence de durcissement sous contrainte. En effet la viscosité élongationnelle diminue jusqu'à rupture ductile de l'échantillon.

### Exemple 3

On alimente l'extrudeuse avec le même mélange que celui de l'exemple 1 sauf que l'on remplace le copolymère à blocs du propylène par un copolymère statistique du propylène commercialisé sous la dénomination ELTEX P KF 001 P par SOLVAY. Le diagramme RER de la composition ainsi obtenue représenté à la courbe 3 (figure 1) montre le même phénomène de durcissement sous contrainte que celui manifesté par la composition de l'exemple 1. Cette composition est exempte de gels.

### Exemple 4

On reproduit l'exemple 3, sauf que le TMPTA est remplacé par du triméthylol - propane - éthoxy - triacrylate.

Le diagramme RER de cette composition (courbe 4, figure 1) montre également le phénomène de durcissement sous contrainte.

### Exemple 5R

On alimente l'extrudeuse avec le mélange de polymères de l'exemple 3 mais sans addition de TMPTA ni de DHBP.

Le diagramme RER de cette composition (courbe 5, figure 1) montre le même phénomène que celui de la composition de l'exemple 2R.

### Exemple 6R

On reproduit l'exemple 1 mais en omettant le polyéthylène et en mettant en oeuvre 3 000 g d'un homopolymère commercialisé sous la dénomination ELTEX P HL 001 P par SOLVAY. Le diagramme RER de la composition ainsi obtenue (courbe 6, figure 1) ne montre pas le phénomène de durcissement sous contrainte.

Cet exemple met en évidence l'importance du polyéthylène pour l'obtention des bonnes propriétés rhéologiques des compositions selon la présente invention.

### Exemple 7R

On reproduit l'exemple 1, sauf que l'on remplace le TMPTA par une quantité équivalente de triéthylène-glycol-diméthacrylate (TEGDMA). Le diagramme RER représenté à la courbe 1 de la figure 2 montre l'absence de phénomène de durcissement structural sous contrainte.

### Exemple 8

On reproduit l'exemple 1, sauf que l'on remplace le TMPTA par une quantité équivalente de triméthylol-propane-triméthacrylate (TRIM). Ici encore, le diagramme RER représenté à la courbe 2 de la figure 2 montre le phénomène de durcissement structural sous contrainte.

### Exemple 9

On effectue dans un premier temps un prémélange en fondu en alimentant l'extrudeuse par un mélange contenant 2400 g d'un homopolymère du propylène commercialisé sous la dénomination ELTEX P HL 402 et 600 g de polyéthylène ELTEX A 1050 P. La vitesse de rotation des vis de l'extrudeuse est de 100 tours/min et le débit de matière est de 4 kg/h.

On reproduit alors l'exemple 1 en alimentant l'extrudeuse avec ce mélange et 0,6 g/kg de DHBP et 12 g/kg de TMPTA.

On obtient ainsi une composition présentant le phénomène de durcissement structural sous contrainte (figure 2, courbe 3).

## Revendications

**1 -** Composition à base de polymère du propylène obtenue par mélange en fondu de:
- 35 à 98,98 % en poids d'un polymère (a) choisi parmi les homopolymères du propylène et les copolymères du propylène contenant au moins 50 % en mole de propylène,
- 1 à 50 % en poids d'un polymère (b) choisi parmi les homopolymères d'éthylène et les copolymères d'éthylène contenant au moins 90 % en mole d'éthylène, avec
- de 0,01 à 10 % en poids d'un composé fonctionnel (c) choisi parmi les composés comprenant au moins 3 groupements acrylate;
- de 0,01 à 5 % en poids d'un composé (d) susceptible de générer des radicaux libres.

**2 -** Composition selon la revendication 1, dans laquelle les polymères (a) et (b) constituent au moins 99 % en poids de l'ensemble des polymères mis en oeuvre.

**3 -** Composition selon l'une quelconque des revendications 1 et 2, dans laquelle le polymère (a) est choisi parmi les copolymères du propylène.

**4 -** Composition selon la revendication 3, dans laquelle le polymère (a) est choisi parmi les copolymères à blocs du propylène.

**5 -** Composition selon l'une quelconque des revendications 1 à 4, dans laquelle le polymère (b) est choisi parmi les polymères d'éthylène dont la densité est de 0,94 à 0,98.

**6 -** Composition selon la revendication 1, dans laquelle le polymère (a) est un homopolymère du propylène et la quantité de polymère (b) mis en oeuvre est d'au moins 20 % en poids.

**7 -** Composition selon la revendication 3, dans laquelle la quantité de polymère (b) mis en oeuvre est de 10 à 20 % en poids.

**8 -** Composition selon l'une quelconque des revendications 1 à 7, dans laquelle le composé fonctionnel (c) est choisi parmi les composés comprenant de 3 à 5 groupements acrylate.

**9 -** Composition selon la revendication 8, dans laquelle le composé fonctionnel (c) est choisi parmi le triméthylol - propane - triacrylate, le triméthylol - propane - éthoxy - triacrylate, le glycérol - propoxy - triacrylate, le pentaérythritol - triacrylate, le di - triméthylol - propane - tétracrylate, pentaérythritol - tétracrylate, le pentaérythritol - éthoxy - tétracrylate, le triméthylol - propane - triméthacrylate et le pentaérythritol - éthoxy - triacrylate.

**10 -** Composition selon l'une quelconque des revendications 1 à 9, dans laquelle la quantité de composé fonctionnel (c) est de 0,5 à 2 % en poids.

**11 -** Composition selon l'une quelconque des revendications 1 à 10, dans laquelle le composé (d) est un peroxyde.

**12 -** Composition selon l'une quelconque des revendications 1 à 11, dans laquelle la quantité de composé (d) est de 0,01 à 0,1 % en poids.

**13 -** Composition selon l'une quelconque des revendications 1 à 12, présentant un durcissement structural sous contrainte.

**14 -** Utilisation d'une composition selon l'une quelconque des revendications 1 à 13 pour l'obtention d'objets façonnés par extrusion- ou injection-soufflage, thermoformage ou enduction.

**15 -** Utilisation d'une composition selon l'une quelconque des revendications 1 à 13 pour la fabrication de mousses.

**16 -** Objets façonnés contenant une composition selon l'une quelconque des revendications 1 à 13.

**17 -** Procédé d'obtention d'une composition à base de polymère du propylène comprenant une étape de mélange en fondu de:
- 35 à 98,98 % en poids d'un polymère (a) choisi parmi les homopolymères et les copolymères du propylène contenant au moins 50 % en mole de propylène,
- 1 à 50 % en poids d'un polymère (b) choisi parmi les homopolymères d'éthylène et les copolymères d'éthylène contenant au moins 90 % en mole d'éthylène,
avec
- de 0,01 à 10 % en poids d'un composé fonctionnel (c) choisi parmi les composés comprenant au moins 3 groupements acrylate;
- de 0,01 à 5 % en poids d'un composé susceptible de générer des radicaux libres.

**18 -** Procédé selon la revendication 17, appliqué à l'obtention d'une composition selon l'une quelconque des revendications 1 à 13.
